# EUROPEAN PATENT APPLICATION

(11) **EP 1 524 828 A2**
(43) Date of publication of application: **20.04.2005**
(21) Application number: 04024560.7
(22) Date of filing: 14.10.2004
(51) Int. Cl.: H04M 1/725, H04H 1/08

(54) **Broadcasting and communicating combined terminal**

(30) Priority: 15.10.2003 JP 2003354446
(71) Applicant: NEC CORPORATION, Tokyo (JP)
(72) Inventor: Kaneda, Satoru, Tokyo (JP)
(74) Representative: von Samson-Himmelstjerna, Friedrich R.

(57) **Abstract**

A broadcasting and communicating combined terminal is provided which is capable of accumulating, when communication or information notice has occurred, broadcast contents (100) only when a viewer desires to accumulate the broadcast contents (100). A first controlling unit (6), when receiving a signal of incoming call notification (101), makes a reference to selection information stored in a selection information storing unit (11) to check whether or not the viewer desires to accumulate broadcast contents (100) being now received and, if the stored selection information indicates that broadcast contents (100) are to be accumulated, transmits a signal of a reproduction stop request (102) for broadcast contents (100) to a broadcast reproducing unit (2) and a signal of an accumulation start request (103) to a broadcast accumulating unit (7) . The broadcast accumulating unit (7) starts accumulation of broadcast contents (100).

## Description

### BACKGROUND OF THE INVENTION

### Field of the Invention

The present invention relates to a broadcasting and communicating combined terminal and more particularly to the broadcasting and communicating combined terminal having a function of accumulating broadcast contents.

The present application claims priority of Japanese Patent Application No. 2003-354446 filed on October 15, 2003, which is hereby incorporated by reference.

### Description of the Related Art

As one example of a conventional broadcasting and communicating combined terminal, a so-called "browser phone" realized by combining a phoning function with a Web browsing function is available. That is, when a user gets an incoming call while the user is browsing a Web site by using the browser phone, even if the user quits a Web browser once and answers the telephone call, by restarting the Web browser after having terminated the telephone call, the user can again obtain information that was available before the Web browsing was discontinued.

In an operation of browsing the Web site, since information is distributed on demand, even if the browsing is discontinued for some reason, the user can restart browsing, whenever the user desires, from any portion of browsed contents from which the browsing was discontinued.

On the other hand, in a broadcast via a television or a like, broadcast contents are distributed simultaneously from a broadcasting station to many viewers. That is, the distribution of information cannot be discontinued due to specified circumstances on a side a viewer or on a side of an information receiving device, or the distribution of information cannot be restarted from any portion of broadcast contents from which distribution was discontinued.

However, by accumulating broadcast contents, a user can read the accumulated contents of the broadcast after having completed another task, such as a telephone call, and can reproduce the broadcast contents. In recent years, a so-called "television program accumulating and reproducing device" having a program chasing reproducing function which enables a television program to be reproduced while being accumulated is commercially available.

For example, when a user gets an incoming call, by driving the television program accumulating and reproducing device before the user answers the telephone and then, by performing the program chasing reproducing operation when the user ends the telephone conversation, the user can reproduce and restart the program from a portion of broadcast contents from which the program began to be accumulated while being accumulated.

Also, one example of conventional technology of the type described above is disclosed in Japanese Patent Application Laid-open No. 2001-333334 (Paragraph No. 0010, Figure 1 of the patent document) in which an incoming call is detected by a program accumulating and reproducing device which operates independently from a telephone and accumulation is started automatically. That is, in the disclosed technology, by connecting a telephone modem (modulator-demodulator) to a television having a function of accumulating and reproducing a program and by periodically monitoring a state of using a telephone line, when use of a telephone is detected by the television connected to the telephone, accumulation of a program is started.

Also, another example of the conventional technology of the type described above is disclosed in Japanese Patent Application Laid-open No. 2002-77323 (Paragraph Nos. 0024 and 0032, Figs. 2 and 4 of the prior art) in which, when a user gets an incoming call while watching a television, if a caller' s telephone number has been accumulated in a caller database, accumulation of a program is started and reproduction of contents accumulated in a storing medium is started according to a signal from a communication detecting section. Still another example of the conventional technology of the type described above is disclosed in Japanese Patent Application No. 2002-374489 (Paragraph Nos. 0030 and 0033, Figure 1 of the prior art) in which, when an incoming call signal and off-hook signal are detected, a program currently being received is accumulated in a storing medium and, after a telephone conversation has been terminated, the accumulated program is reproduced by a user' s manipulation of an input section. Still another example of the conventional technology of the type described above is disclosed in Japanese Patent Application No. Hei 7 - 130150 (Paragraph Nos. 0006, 0011, and 0012) in which accumulation of a program is automatically started according to a telephone call receiving detection signal and, when a communication termination detecting signal is received, reproduction of stored contents and accumulation of the program are performed in parallel.

Thus, in the conventional technology, when an incoming telephone call is received, broadcast contents are automatically accumulated, however, there are some cases in which accumulation of broadcast contents are not needed.

### SUMMARY OF THE INVENTION

In view of the above, it is an object of the present invention to provide a broadcasting and communicating combined terminal which is capable of accumulating, when communication or information notice has occurred, broadcast contents only when a viewer desires to accumulate the broadcast contents.

According to a first aspect of the present invention, there is provided a broadcasting and communicating combined terminal including:
a broadcast receiving means;
a unidirectional or bidirectional communicating means;
a selection information storing means to store selection information used to determine whether or not broadcast contents received by the broadcast receiving means are to be accumulated; and
a first controlling means which, when receiving, from the communicating means, a notification indicating that communication or information notice has occurred, causes the broadcast contents to be accumulated or causes an accumulation start position to be stored according to the selection information stored in the selection information storing means.

In the foregoing, a preferable mode is one that wherein includes:
a broadcast accumulating means to accumulate the broadcast contents and wherein the first controlling means, when receiving, from the communicating means, the notification indicating that communication or information notice has occurred, causes the broadcast accumulating means to accumulate the broadcast contents according to the selection information stored in the selection information storing means.

Also, a preferable mode is one that wherein includes:
a broadcast accumulating means being placed on a network outside the terminal proper and ordinarily accumulating the broadcast contents; and
an accumulation start position storing means being mounted in the terminal proper and recording an accumulation start position in the broadcast accumulating means;
wherein the first controlling means, when receiving, from the communicating means, the notification indicating that communication or information notice has occurred, stores an accumulation start position in the accumulation start position storing means according to the selection information stored in the selection information storing means.

Also, a preferable mode is one that wherein includes a second controlling means which, when receiving, from the communicating means, the notification indicating that communication or information notice terminates, sequentially outputs broadcast contents accumulated in the broadcast accumulating means from the accumulation start position stored in the accumulation start position storing means

Also, a preferable mode is one that wherein includes a second controlling means which, when receiving, from the communicating means, the notification indicating that communication or information notice terminates, sequentially outputs accumulated contents stored in the broadcast accumulating means from the accumulation start position stored in the accumulation start position storing means.

Also, a preferable mode is one wherein the first controlling means, when selection information stored in the selection information storing means indicates that broadcast contents are to be accumulated, causes the broadcast accumulating means to accumulate the broadcast contents.

Also, a preferable mode is one wherein the first controlling means, when selection information stored in the selection information storing means indicates that broadcast contents are to be accumulated, causes the accumulation start position storing means to record the accumulation start position.

Also, a preferable mode is one wherein the selection information storing means is an automatic accumulation setting register to store a set value indicating whether or not the broadcast contents are to be accumulated.

Also, a preferable mode is one wherein the selection information storing means includes a display device on which the selection information is displayed.

Also, a preferable mode is one that wherein includes an automatic accumulation setting register in which a set value to be used to determine whether or not the broadcast contents are to be accumulated and a display device on which the selection information is displayed, both being mounted as the selection information storing means and wherein, when a set value indicating that broadcast contents are to be accumulated is not stored, the selection information is displayed on the display device.

Furthermore, a preferable mode is one wherein at least the broadcast receiving means and the communicating means are produced as independent devices and configured such that these independent devices are operated in conjunction with each other by a mutual communication.

With the above configuration, broadcast contents can be automatically accumulated only when a viewer desires to accumulate the broadcast contents.

### BRIEF DESCRIPTION OF THE DRAWINGS

The above and other objects, advantages, and features of the present invention will be more apparent from the following description taken in conjunction with the accompanying drawings in which:
Fig. 1 is a schematic block diagram showing a broadcasting and communicating combined terminal of a first embodiment of the present invention;
Fig. 2 is a timing diagram showing an operation of the broadcasting and communicating combined terminal of the first embodiment of the present invention;
Fig. 3 is a schematic block diagram showing a broadcasting and communicating combined terminal of a second embodiment of the present invention;
Fig. 4 is a schematic block diagram showing a broadcasting and communicating combined terminal of a third embodiment of the present invention;
Fig. 5 is a schematic block diagram showing a broadcasting and communicating combined terminal of a fourth embodiment of the present invention; and
Fig. 6 is a schematic block diagram showing a broadcasting and communicating combined terminal of a fifth embodiment of the present invention.

### DETAILED DESCRIPTION OF THE PREFERRED EMBODIMENTS

Best modes of carrying out the present invention will be described in further detail using various embodiments with reference to the accompanying drawings.

### First Embodiment

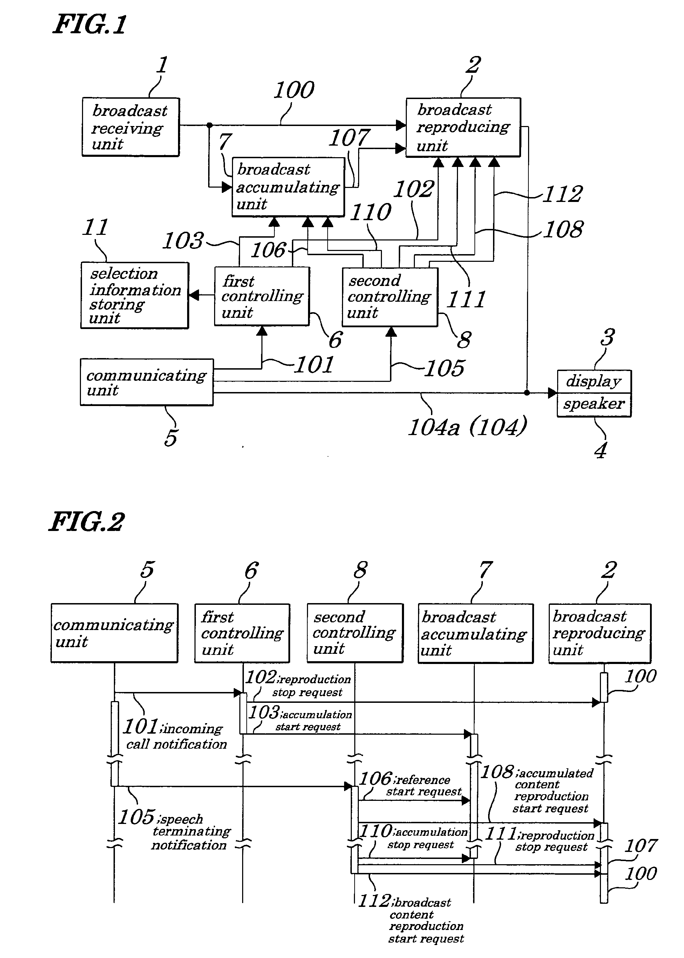

Figure 1 is a schematic block diagram showing a broadcasting and communicating combined terminal of a first embodiment of the present invention. As shown in Fig. 1, the broadcasting and communicating combined terminal of the first embodiment includes a broadcast receiving unit (means, circuit) 1, a broadcast reproducing/restarting unit (means; circuit; hereinafter referred to as broadcast reproducing unit) 2, a display 3, a speaker 4, a communicating unit (means, circuit) 5, a first controlling unit (means, circuit) 6, a broadcast accumulating unit (means, circuit) 7, a second controlling unit (means, circuit) 8, and a selection information storing unit (means, circuit) 11.

Figure 2 is a timing diagram showing an operation of the broadcasting and communicating combined terminal of the first embodiment. Operations of the broadcasting and communicating combined terminal of the first embodiment are described by referring to Figs. 1 and 2. The broadcast receiving unit 1 receives broadcasting signal waves and acquires broadcast contents 100. The broadcast content reproducing unit 2 performs data processing on the obtained broadcast contents 100, fetches moving images, voices, still (freeze-frame) images, and/or text data, and outputs them to the display 3 and/or the speaker 4.

The communicating unit 5, when communication or information notice has occurred (for example, when an incoming call is received, or when a call is originated), transmits a signal of incoming call notification 101 to the first controlling unit 6. The first controlling unit 6, when receiving the signal of the incoming call notification 101, transmits a signal of a reproduction stop request 102 for the broadcast contents 100 to the broadcast reproducing unit 2 and a signal of an accumulation start request 103 to the broadcast accumulating unit 7. The broadcast accumulating unit 7, when receiving the accumulation start request 103, starts accumulation of the broadcast contents 100. At this pint in time, the communicating unit 5 starts output of communication contents 104 to the display 3 and/or the speaker 4 via a signal line 104a.

The communicating unit 5, when a telephone conversation is terminated, transmits a signal of a speech terminating notification 105 to the second controlling unit 8. The second controlling unit 8, when receiving the speech terminating notification 105, transmits a signal of a reference start request 106 to the broadcast accumulating unit 7. The broadcast accumulating unit 7, after having received the reference start request 106, outputs sequentially an accumulated contents 107 from a portion of broadcast contents 100 from which the accumulation started. The second controlling unit 8, at almost the same time when transmitting the signal of the reference start request 106, transmits a signal of an accumulated content reproduction start request 108 to the broadcast reproducing unit 2 so that the accumulated contents 107 are reproduced.

The broadcast accumulating unit 7, even while the second controlling unit 8 are reproducing the accumulated contents 107, continues to accumulate the broadcast contents 100 to be received from the broadcast receiving unit 1. The second controlling unit 8 may make the accumulated contents 107 fast-forward by increasing an output speed of the broadcast accumulating unit 7 or a reproducing speed of the broadcast reproducing unit 2. The second controlling unit 8 may skip the reproduction for several seconds or several tens seconds according to the accumulated contents 107 to be output from the broadcast accumulating unit 7.

When the accumulated contents 107 being reproduced catch up with the broadcast contents 100 being broadcast by the operations described above, the second controlling unit 8 transmits a signal of an accumulation stop request 110 to the broadcast accumulating unit 7 and a signal of a reproduction stop request 111 to the broadcast reproducing unit 2 so that the reproduction of the accumulated contents 107 is stopped and a signal of a broadcast content reproduction start request 112 to the broadcast reproducing unit 2 so that the reproduction of the broadcast contents 100 is started.

On the other hand, when the signal of incoming call notification 101 from the communicating unit 5 is not received, the first controlling unit 6 transmits neither the signal of the reproduction stop request 102 to the broadcast reproducing unit 2 nor the signal of the accumulation start request 103 to the broadcast accumulating unit 7. Therefore, in this case, the reproduction of broadcast contents 100 is continued and no broadcast contents 100 are accumulated.

Moreover, one example of the communications described above includes bidirectional (bilateral) communications such the telephone as shown in the first embodiment and one example of the information notice described above includes unidirectional (unilateral) communications such as receiving of information provided by the Web site or bidirectional communications such as receiving and transmitting of electronic mail and a like.

Basic configurations and operations of the broadcasting and communicating combined terminal according to the first embodiment are as described above. However, the present invention is featured by the selection information storing unit 11, in particular, in addition to the above configurations. The viewer stores, in advance, information as to whether or not the viewer desires to accumulate broadcast contents 100, in the selection information storing unit 11. Operations of the selection information storing unit 11 are described below.

That is, the communicating unit 5, when receiving an incoming call, transmits the signal of incoming call notification 101 to the first controlling unit 6. The first controlling unit 6, when receiving the signal of incoming call notification 101, makes a reference to selection information stored in the selection information storing unit 11 to check whether or not the viewer desires to accumulate broadcast contents 100 currently being received and, if the selection information stored in the selection information storing unit 11 indicates that the viewer desires to accumulate the broadcast contents 100, transmits a signal of a reproduction stop request 102 to the broadcast reproducing unit 2 and a signal of an accumulation start request 103 to the broadcast accumulating unit 7. Thereafter, the same operations as described are performed.

On the other hand, if the selection information stored in the selection information storing unit 11 indicates that the viewer does not desire to accumulate broadcast contents 100, the first controlling unit 6 transmits a signal of the reproduction stop request 102 to the broadcast reproducing unit 2 and does not transmit a signal of the accumulation start request 103 to the broadcast accumulating unit 7. Therefore, even when an incoming call is received, broadcast contents 100 are not accumulated. At this point in time, the communicating unit 5 outputs the communication contents 104 to the display 3 and/or the speaker 4.

Moreover, each of the broadcast receiving unit 1, communicating unit 5, and broadcast reproducing unit 2 can be constructed independently in a separate unit and can be operated in conjunction with each other by using a mutual communication method.

That is, according to the broadcasting and communicating combined terminal, the viewer can immediately start communications or can make a reference for information notice, without performing an operation of starting a process of accumulation. The reason is that the broadcasting and communicating combined terminal can automatically accumulate broadcast contents 100 only when the selection information stored in the selection information storing unit 11 indicates that the viewer desires to accumulate the broadcast contents 100.

Moreover, the viewer can immediately resume receiving of a broadcast from a portion from which the broadcast was interrupted without performing a process of starting reproduction or without searching for the point of interruption of the broadcast. The reason is that the broadcasting and communicating combined terminal, when the communications are over or information notice terminates, sequentially outputs the broadcast contents 100 accumulated by the broadcast accumulating unit 7 from a portion of broadcast contents 100 from which the accumulation started.

### Second Embodiment

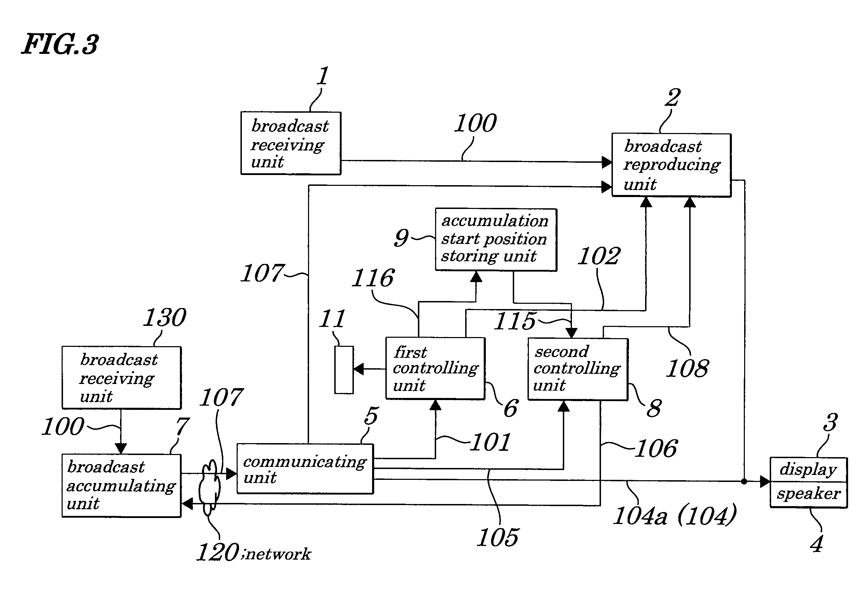

Figure 3 is a schematic block diagram showing a broadcasting and communicating combined terminal of a second embodiment of the present invention. As shown in Fig. 3, configurations of the broadcasting and communicating combined terminal of the second embodiment differ from those in the first embodiment in that a broadcast accumulating unit 7 is connected over a network 120 being installed outside and ordinarily accumulates broadcast contents 100 fed from a broadcast receiving unit 130 and in that an accumulation start position storing unit 9 is newly mounted at a place where the broadcast accumulating unit 7 employed in the first embodiment was mounted.

In the second embodiment, let it be assumed that the broadcast receiving unit 130 receives the same broadcast contents 100 as a broadcast receiving unit 1 is receiving and that the broadcasting and communicating combined terminal can access the broadcast accumulating unit 7.

While the broadcast contents 100 are being reproduced by a broadcast reproducing unit 2, if the communicating unit 5 receives an incoming call, the communicating unit 5 transmits a signal of incoming call notification 101 to a first controlling unit 6. The first controlling unit 6, when receiving the signal of incoming call notification 101, makes a reference to selection information stored in a selection information storing unit 11 to check whether a user desires to accumulate broadcast contents 100 currently being received and, if the selection information indicates that the viewer desires to accumulate the broadcast contents 100, transmits a signal of a reproduction stop request 102 to the broadcast reproducing unit 2 to stop reproduction and stores present time 116 in the accumulation start position storing unit 9.

The communicating unit 5 then allows a telephone speech communication. The communicating unit 5, after having terminated the telephone speech communication, transmits a signal of speech communication terminating notification 105 to a second controlling unit 8. The second controlling unit 8 reads information about an accumulation start position 115 from the accumulation start position storing unit 9 and transmits a signal of a reference start request 106 to make a request for transmission of accumulated contents 107 from the accumulation start position 115 to the broadcast accumulating unit 7 connected over the network 120. The communicating unit 5 receives the accumulated contents 107 from the broadcast accumulating unit 7 and transfers it to the broadcast reproducing unit 2. The broadcast reproducing unit 2 performs processing on the accumulated contents 107 to fetch an image, voice, freeze-frame image, or text and outputs them on a display 3 and/or speaker 4.

On the other hand, if the selection information stored in the selection information storing unit 11 indicates that the viewer does not desire to accumulate the broadcast contents 100, the first controlling unit 6 transmits a signal of a reproduction stop request 102 to the broadcast reproducing unit 2 and does not performprocessing of storing present time 116 in the accumulation start position storing unit 9.

Therefore, even after telephone speech communication is over, the communicating unit 5 neither receives the accumulated contents 107 from the broadcast accumulating unit 7 nor transmits it to the broadcast reproducing unit 2.

Unlike in the first embodiment in which, when the accumulated contents 107 catch up with the broadcast contents 100 by using the fast-forward function or skip function, the second controlling unit 8 transmits a signal of an accumulation stop request 110 to the broadcast accumulating unit 7, in the second embodiment, since the broadcast accumulating unit 7 continues accumulation of broadcast contents 100, even if the accumulated contents 107 catch up with broadcast contents 100, the second controlling unit 8 needs not transmit a signal of a request for stopping accumulation to the broadcast accumulating unit 7.

In the case in which there is a low possibility that accumulated contents 107 are reproduced after telephone speech communication is over or in which, even if the accumulated contents 107 are reproduced, skip reproduction of a part of the accumulated contents 107 is enough, by employing the broadcasting and communicating combined terminal of the embodiment, power consumption can be reduced. However, since accumulated contents 107 are obtained by communications, if a user is charged for telephone communicating service on an as-used basis, a communication charge accrues.

Thus, according to the broadcasting and communicating combined terminal of the second embodiment, accumulation of broadcast contents 100 on a side of the terminal is no longer needed, which enables reduction in power consumption and memory consumption in the terminal and which can prevent a problem that the accumulation becomes impossible due to exacerbated conditions for signal receiving. The reason is that broadcast contents 100 are ordinarily accumulated by the broadcast accumulating unit installed outside and the terminal can get the accumulated contents from the broadcast accumulating unit 7.

### Third Embodiment

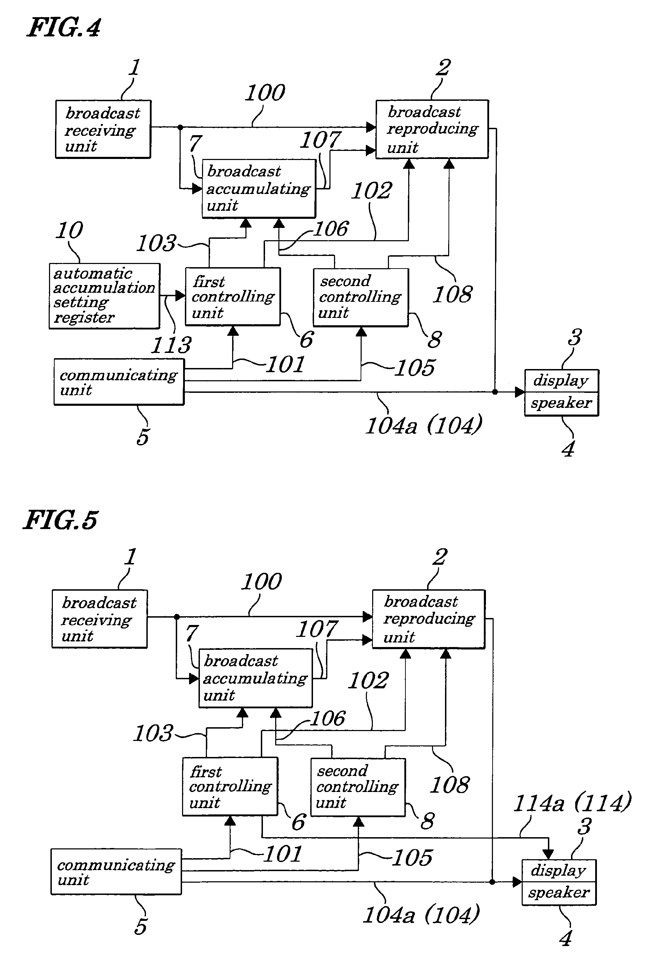

Figure 4 is a schematic block diagram showing a broadcasting and communicating combined terminal of a third embodiment of the present invention. As shown in Fig. 4, in the third embodiment, instead of a selection information storing unit 11 employed in the first embodiment, an automatic accumulation setting register 10 is newly used. Configurations other than the newly-employed automatic accumulation setting register 10 are the same as employed in the first embodiment and their descriptions are omitted accordingly.

In the third embodiment, a viewer stores, in advance, a set value 113 which determines whether or not broadcast contents 100 are to be accumulated while a telephone call is in progress, in the automatic accumulation setting register 10.

A first controlling unit 6, when receiving a signal of an incoming call notification 101 from a communicating unit 5, transmits a signal of a reproduction stop request 102 for broadcast contents to a broadcast reproducing unit 2. Next, the first controlling unit 6 makes a reference to the set value 113 stored in the automatic accumulation setting register 10 and, if the set value 113 indicates that broadcast contents 100 are to be accumulated, transmits a signal of an accumulation start request 103 to a broadcast accumulating unit 7 to have the broadcast contents 100 be accumulated. Operations subsequent to this are the same as in the first embodiment and their descriptions are omitted accordingly.

On the other hand, if the set value 113 stored in the automatic accumulation setting register 10 indicates that the broadcast contents 100 are not to be accumulated, the first controlling unit 6 transmits the signal of the accumulation start request 103 to the broadcast accumulating unit 7 and does not perform processing to have the broadcast contents 100 be accumulated.

Operations of the broadcasting and communicating combined terminal of the third embodiment differ from those in the first embodiment in that whether broadcast contents 100 are accumulated is determined by selection information provided by the set value 113 stored in the automatic accumulation setting register 10. One concrete example of how to provide the selection information is described in the third embodiment. Therefore, effects to be obtained in the third embodiment are the same as realized in the first embodiment.

### Fourth Embodiment

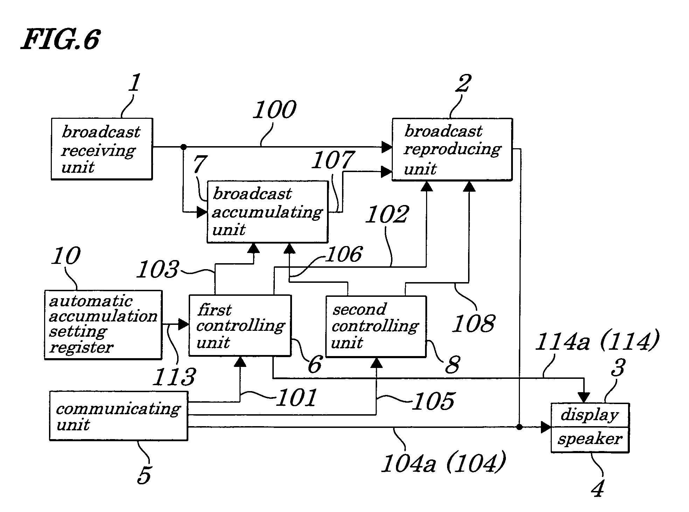

Figure 5 is a schematic block diagram showing a broadcasting and communicating combined terminal of a fourth embodiment of the present invention. Configurations of the broadcasting and communicating combined terminal of the fourth embodiment differ from those employed in the first embodiment in that a selection information storing unit 11 employed in the first embodiment is removed and a signal line 114a (to be used for providing a selection menu 114 to start accumulation) to be connected between a first controlling unit 6 and a display 3. Configurations other than above are the same as in the first embodiment and their descriptions are omitted accordingly.

The first controlling unit 6, when receiving a signal of an incoming call notification 101, causes a selection menu 114 to start accumulation appear on the display 3. The selection menu 114 is made up of a button to be displayed on the display 3, which indicates either of two states, one state showing that broadcast 100 contents are to be accumulated and another state showing that broadcast contents 100 are not to be accumulated. When a viewer selects the button indicating that broadcast contents 100 are to be accumulated, the first controlling unit 6 transmits a signal of an accumulation start request 103 to a broadcast accumulating unit 7 to start accumulation of the broadcast contents 100.

On the other hand, when the viewer selects the button indicating that broadcast contents 100 are not to be accumulated, the first controlling unit 6 transmits the signal of the accumulation start request 103 to the broadcast accumulating unit 7 and does not perform processing to have the broadcast contents 100 be accumulated.

Thus, according to the broadcasting and communicating combined terminal of the fourth embodiment, since an existing display 3 for displaying a moving image, voice, freeze-image, or text data, instead of the selection information storing unit 11, is used and, therefore, mounting of the selection information storing unit 11 is not required. As a result, costs can be reduced and the terminal size can be reduced.

### Fifth Embodiment

Figure 6 is a schematic block diagram showing a broadcasting and communicating combined terminal of a fifth embodiment of the present invention. As shown in Fig. 6, the broadcasting and communicating combined terminal is so configured that an automatic accumulation setting register 10 employed in the third embodiment shown in Fig. 4 is added to configurations of the broadcasting and communicating combined terminal of the fourth embodiment shown in Fig. 5.

In the broadcasting and communicating combined terminal of the fifth embodiment, when a first controlling unit 6 has received a signal of incoming call notification 101 from a communicating unit 5, if a set value stored in the automatic accumulation setting register 10 indicates that broadcast contents 100 are to be accumulated, transmits a signal of an accumulation start request 103 to a broadcast accumulating unit 7 and, if the set value stored in the automatic accumulation setting register 10 indicates that the broadcast contents 100 are not to be accumulated, causes a selection menu 114 to start accumulation be displayed on a display 3. Then, if a button indicating that the broadcast contents 100 are to be accumulated is selected, the first controlling unit 6 transmits the signal of the accumulation start request 103 to the broadcast accumulating unit7.

Thus, according to the broadcasting and communicating combined terminal of the fifth embodiment, in order to display selection information, the automatic accumulation setting register 10 and the selection menu 114 are mounted. Even if a set value stored in the automatic accumulation setting register 10 indicates that broadcast contents are not to be accumulated, setting can be changed by using the selection menu 114, instead of the automatic accumulation setting register 10, so that the setting indicates that broadcast contents are to be accumulated.

Moreover, in the third to fifth embodiments, even when the setting indicates that broadcast contents 100 are to be accumulated, if the broadcast accumulating unit 7 connected via the network 120 can be used, by storing a position of accumulation start in the accumulation start position storing unit 9, though communications charge accrues, accumulated contents 107 stored during telephone speech communication can be viewed.

It is apparent that the present invention is not limited to the above embodiments but may be changed and modified without departing from the scope and spirit of the invention.

## Claims

1. A broadcasting and communicating combined terminal **characterized by** comprising:
a broadcast receiving means (1);
a unidirectional or bidirectional communicating means (5) ;
a selection information storing means (11) to store selection information used to determine whether or not broadcast contents (100) received by said broadcast receiving means (1) are to be accumulated; and
a first controlling means (6) which, when receiving, from said communicating means (5), a notification indicating that communication or information notice has occurred, causes said broadcast contents (100) to be accumulated or causes an accumulation start position to be stored according to the selection information stored in said selection information storing means (11).

2. The broadcasting and communicating combined terminal according to Claim 1, **characterized by** further comprising:
a broadcast accumulating means (7) to accumulate said broadcast contents (100) and wherein said first controlling means (6), when receiving, from said communicating means (5), the notification indicating that communication or information notice has occurred, causes said broadcast accumulating means (7) to accumulate said broadcast contents (100) according to the selection information stored in said selection information storing means (11).

3. The broadcasting and communicating combined terminal according to Claim 1, **characterized by** further comprising:
a broadcast accumulating means (7) being placed on a network outside the terminal proper and ordinarily accumulating said broadcast contents (100); and
an accumulation start position storing means (9) being mounted in the terminal proper and recording an accumulation start position in said broadcast accumulating means (7);
wherein said first controlling means (6), when receiving, from said communicating means (5), the notification indicating that communication or information notice has occurred, stores an accumulation start position in said accumulation start position storing means (9) according to the selection information stored in said selection information storing means (11).

4. The broadcasting and communicating combined terminal according to Claim 2, **characterized by** further comprising a second controlling means (8), when receiving, from said communicating means (5), the notification indicating that communication or information notice terminates, sequentially outputs broadcast contents (100) accumulated in said broadcast accumulating means (7) from the accumulation start position stored in said accumulation start position storing means (9).

5. The broadcasting and communicating combined terminal according to Claim 3, **characterized by** further comprising a second controlling means (8), when receiving, from said communicating means (5), the notification indicating that communication or information notice terminates, sequentially outputs accumulated contents stored in said broadcast accumulating means (7) from the accumulation start position stored in said accumulation start position storing means (9).

6. The broadcasting and communicating combined terminal according to Claim 2, **characterized in that** said first controlling means (6) , when the selection information stored in said selection information storing means (11) indicates that broadcast contents (100) are to be accumulated, causes said broadcast accumulating means (7) to accumulate said broadcast contents (100).

7. The broadcasting and communicating combined terminal according to Claim 3, **characterized in that** said first controlling means (6), when selection information stored in said selection information storing means (11) indicates that broadcast contents (100) are to be accumulated, causes said accumulation start position storing means (9) to record said accumulation start position.

8. The broadcasting and communicating combined terminal according to Claim 1 or Claim 2, **characterized in that** said selection information storing means (11) is an automatic accumulation setting register (10) to store a set value indicating whether or not said broadcast contents (100) are to be accumulated.

9. The broadcasting and communicating combined terminal according to Claim 1 or Claim 2, **characterized in that** said selection information storing means (11) comprises a display device on which said selection information is displayed.

10. The broadcasting and communicating combined terminal according to Claim 1 or Claim 2, **characterizing by** further comprising an automatic accumulation setting register (10) in which a set value to be used to determine whether or not said broadcast contents (100) are to be accumulated and a display device on which said selection information is displayed, both being mounted as said selection information storing means (11) and wherein, when a set value indicating that broadcast contents (100) are to be accumulated is not stored, said selection information is displayed on said display device.

11. The broadcasting and communicating combined terminal according to Claim 1, **characterized in that** at least said broadcast receiving means (1) and said communicating means (5) are produced as independent devices and configured such that these independent devices are operated in conjunction with each other by a mutual communication.
